# EUROPEAN PATENT APPLICATION

(11) **EP 2 829 322 A2**
(43) Date of publication of application: **28.01.2015**
(21) Application number: 14176660.0
(22) Date of filing: 11.07.2014
(51) Int. Cl.: B01J 29/00

(54) **Zeolite complexes**

(30) Priority: 22.07.2013 KR 20130085831
(71) Applicant: Samsung Electronics Co., Ltd, Gyeonggi-do 443-742 (KR)
(72) Inventor: Kim, Jee Yong, Gyeonggi-do (KR); Park, Sang Hyun, Gyeonggi-do (KR); Hahm, Jung Yoon, Gyeonggi-do (KR)
(74) Representative: Taor, Simon Edward William

(57) **Abstract**

Disclosed herein is a zeolite complex including one or more cavities and one or more channels having a pipe shape. The zeolite complex is a complex of zeolite crystals, wherein each the zeolite crystal has a cage structure including a crystal-structure hole (H) in a center thereof. The zeolite complex includes a ceramic, a metal ion or a metal oxide in cavities, thus increasing specific heat, improving dehumidifying effects or serving as a catalyst for deodorization.

## Description

Embodiments of the present disclosure relate to zeolite complexes to facilitate transfer of heat and substances between interior and exterior regions of the zeolite complexes and maintain structural strength.

Zeolites are silicate minerals, specifically, aluminosilcates having a complex chemical structure to form porous tetrahedral networks (T-networks).

Zeolites have a cage structure having inner holes whose molecular weight may be estimated and accommodate heteroatoms or respective heteromolecules in the cage.

For example, zeolites store a great amount of water (H₂O) and discharge the water upon heating.

In addition, zeolites are particularly suitable for thermal deformation and fills of molded zeolites are used for heat exchangers or solid bodies of cavities thermally contacting the heat exchangers. In addition, zeolites are used in the chemical industry. For example, synthesized zeolites are used as powders having a crystal size of several micrometers in ion exchange processes.

In addition, zeolites are used as molecular sieves and are incorporated as crystals or loose fills of molded substances in filter systems.

Zeolites produced as complexes have a density of 500 to 800 kg/m³. When the density of zeolites is below this level, complex structures are excessively weak and are thus brittle, and when the density exceeds this level, structural strength of complexes increases, but dead zones in the complexes increase and diffusion rates of heat and substances thus decrease.

Therefore, it is one aspect to provide a zeolite complex having one or more cavities and one or more channels to facilitate transfer of heat and substances between interior and exterior regions of the zeolite complex and maintain structural strength.

It is one aspect to provide a zeolite complex which includes a ceramic, a metal ion or a metal oxide in cavities so that the zeolite complex increases specific heat, improves dehumidifying effects or serves as a catalyst for deodorization.

Additional aspects will be set forth in part in the description which follows and, in part, will be obvious from the description, or may be learned by practice of the invention.

In accordance with one aspect, a zeolite complex includes one or more cavities, and a channel to connect the cavities to an exterior part of the zeolite complex, or to connect the cavities.

The zeolite complex may be a complex of zeolite crystals, wherein each zeolite crystal has a cage structure including a crystal-structure hole (H) in a center thereof.

The hole may have a diameter of about 0.24 nm (2.4 Å) to about 0.75 nm (7.5Å).

The hole may include at least one component of a ceramic, a metal ion and a metal oxide.

A weight of the component present in the hole may be less than or equal to 30% of a weight of the zeolite complex.

The cavity may have a diameter of about 30 nm or more.

The cavity may include at least one component of a ceramic, a metal ion and a metal oxide.

A volume of the cavity may be about 5% to about 35% of a volume of the zeolite complex.

The channel may have a straight line or curved portion.

According to an aspect of the invention, there is provided a zeolite complex as set out in claim 1. Preferred features of this aspect are set out in claims 2 to 10.

According to another aspect of the invention, there is provided a method of manufacturing a zeolite complex comprising: mixing zeolite powder with a carbon based polymer material; and heat treating the resulting mixture to burn off the carbon based polymer material so as to produce a zeolite complex comprising cavities and channels, the channels either connecting cavities to an exterior part of the zeolite complex or to connecting cavities to other cavities.

These and/or other aspects will become apparent and more readily appreciated from the following description of the embodiments, taken in conjunction with the accompanying drawings of which:
FIG. 1 is a view illustrating a cage structure which is a structure of a zeolite;
FIGS. 2A and 2B are a view illustrating a size of a hole (H) according to the number of incorporated oxygen (O₂) atoms;
FIG. 3 is a sectional view illustrating a zeolite complex;
FIG. 4A is a sectional view of a zeolite complex including a zeolite crystal;
FIG. 4B is a sectional view of a zeolite complex according to an embodiment;
FIGS. 5A and 5B are an image of a cross-section of the zeolite complex according to the embodiment;
FIG. 6 is a graph showing correlation between a hole diameter and an increment of a hole volume enabling substance transfer, according to the hole diameter;
FIG. 7 is a graph showing correlation between a diameter of a cavity and an increment of a volume of a cavity enabling substance transfer, according to the hole diameter; and
FIG. 8 is a perspective view of the zeolite complex illustrating a channel formed on an outer surface of the zeolite complex;
FIG. 9 is a graph showing a ratio of an amount of removed water to an amount of produced water according to time; and
FIG. 10 shows a zeolite complex containing a ceramic, a metal ion and a metal oxide.

Reference will now be made in detail to the embodiments, examples of which are illustrated in the accompanying drawings, wherein like reference numerals refer to like elements throughout.

Hereinafter, a zeolite complex having one or more cavities and one or more channels will be described in detail with reference to the annexed drawings.

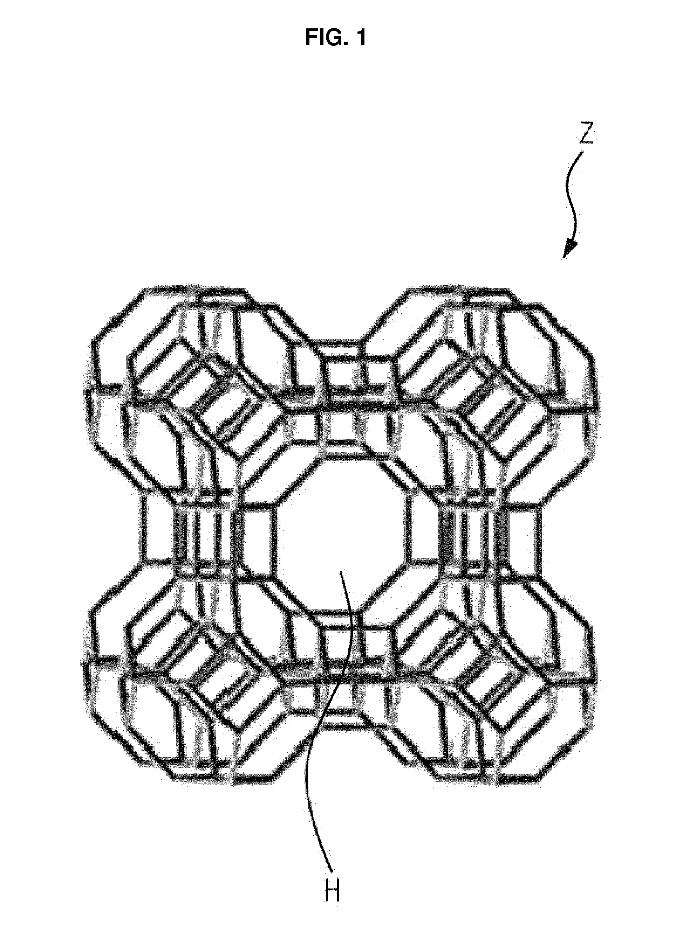

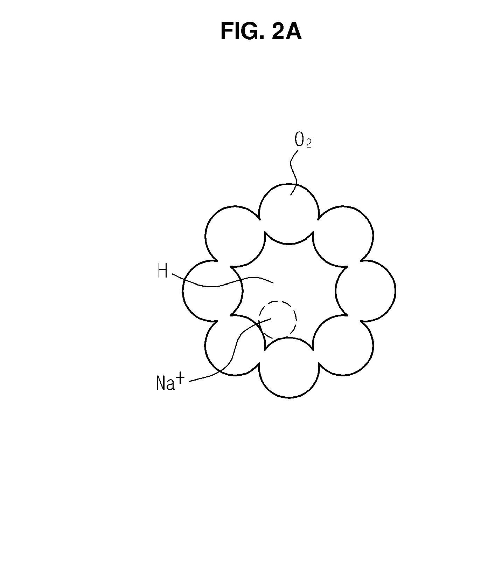

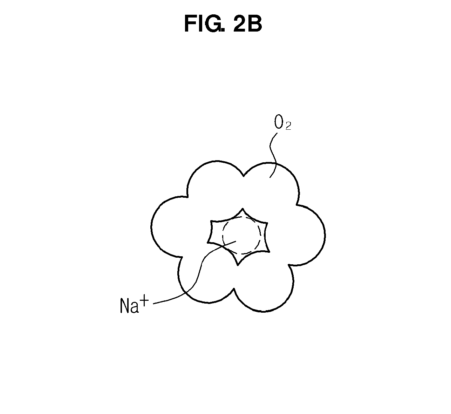

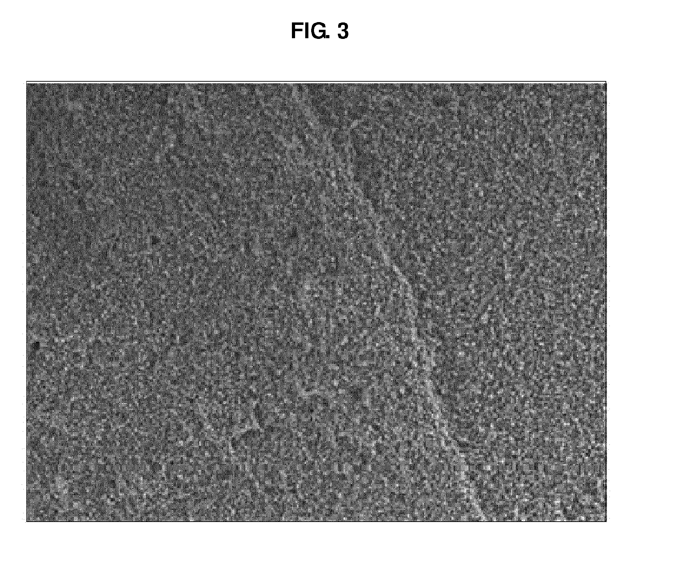

FIG. 1 is a view illustrating a cage structure which is a structure of zeolite, FIG. 2 is a view illustrating a size of a hole (H) according to the number of incorporated oxygen (O₂) and FIG. 3 is a sectional view illustrating a zeolite complex (CP').

Zeolites are hydrous aluminosilicate minerals which contain a small amount of cations such as Na, K, Ca, Mg, Sr and Ba in terms of chemical composition and are represented by the following formula:

Formula MₓD_{y}[A]_{(x+2y)}Sin-_{(x+2y)}O₂ₙ]·mH₂O

wherein M represents a monovalent cation and D represents a divalent cation.

Zeolites belong to the family of tectosilicate minerals, depending on crystal structures thereof, in which all oxygens (O₂) in (Si, Al)O₄ tetrahedrons, which are basic units of silicate minerals, are shared with other tetrahedrons and are three-dimensionally connected.

Referring to FIG. 1, zeolite crystals (Z) have a cage structure. Hereinafter, the cage structure is defined as a crystal structure having a crystal-structure hole (H). The shape of the hole (H) includes spherical and cylindrical shapes and the like. Hereinafter, the following description will be given for convenience of description under the assumption that the hole (H) has a spherical shape.

A diameter of the hole (H) is determined by formation of an oxygen (O₂) ring composed of 4 to 12 oxygen (O₂) atoms and the number of incorporated oxygen (O₂) atoms generally ranges from 0.24 to 0.75 nm (2.4 to 7.5Å).

FIGS. 2A and 2B are views illustrating a size of a hole (H) according to the number of incorporated oxygen (O₂) atoms. As shown in FIGS. 2A and 2B, a size of hole (H) formed by six oxygen (O₂) atoms is greater than that of a hole (H) formed by eight oxygen (O₂) atoms. The size of the hole (H) depends on the type of minerals constituting the zeolite complex (CP').

Cations can be incorporated in the hole (H). In FIG. 2, sodium ions are incorporated in the hole (H).

The incorporation of cations in the hole (H) compensates electric charge loss generated by substitution of some of Si₄+ by Al₃+ in (Si,Al)O₄ tetrahedrons and cations incorporated in the hole (H) are readily substituted by other cations.

In addition, 10 to 18 wt% of water (H₂O) molecules may enter the hole (H) according to characteristics of electrostatically strongly charged cations present in the hole (H).

The crystal structure of zeolites may induce industrially applicable physical and chemical properties such as cation exchange properties, properties of adsorption and molecular sieves, catalyst properties, dehydration and re-absorption properties and heat storage properties and will be described in detail later.

FIG. 3 is a sectional view illustrating a zeolite complex (CP'). The single zeolite crystal (Z) shown in FIG. 1 combines to form a zeolite complex (CP') shown in FIG. 3.

Referring to FIG. 3, the zeolite complex (CP') is composed of closely arranged single crystals (Z). A density of the zeolite complex (CP') is 500 to 800 kg/m³. When the density is lower than the level, the structure of complex (CP') is considerably weak and brittle.

More specifically, when the density of the zeolite complex (CP') increases, the gap between the zeolite crystals (Z) becomes narrow, the crystals are closely arranged and structural strength increases, but passages through which substances move may become narrow, a rate of substance transfer between an outer region of the zeolite complex (CP') and the zeolite crystal may decrease and a dead zone where substance transfer does not occur may be created in the process of forming the complex.

On the other hand, when the density of the zeolite complex (CP') is low, the gap between the zeolite crystals (Z) may be relatively great and a rate of substance transfer between an outer region of the zeolite complex (CP') and the zeolite crystal may increase, but strength may decrease.

In accordance with an embodiment, provided is a zeolite complex (CP) to maintain structural strength of zeolites and to facilitate substance exchange between zeolites with an outer region of the zeolite complex.

In the present embodiment, the zeolite complex (CP) may have a spherical shape and may be molded into a pellet, cylinder or monolith shape.

In addition, the zeolite complex (CP) may have a dry strength of 0.5 to 1.5 kgf/cm2, more specifically 0.8 to 1.2 kgf/cm².

In addition, the zeolite complex (CP) may have a wet strength of 0.3 kgf/cm2 or higher.

In addition, the zeolite complex (CP) may have a density of 800 kg/m³ or less, more specifically 500 kg/m³ or less.

Hereinafter, for convenience of description, a zeolite complex (CP) having a spherical shape will be described in detail.

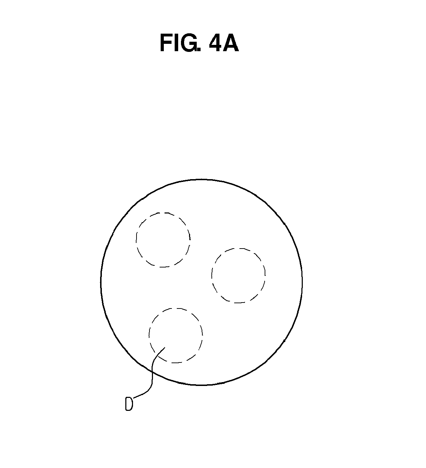

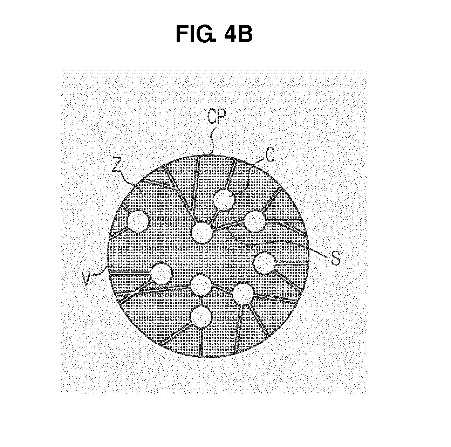

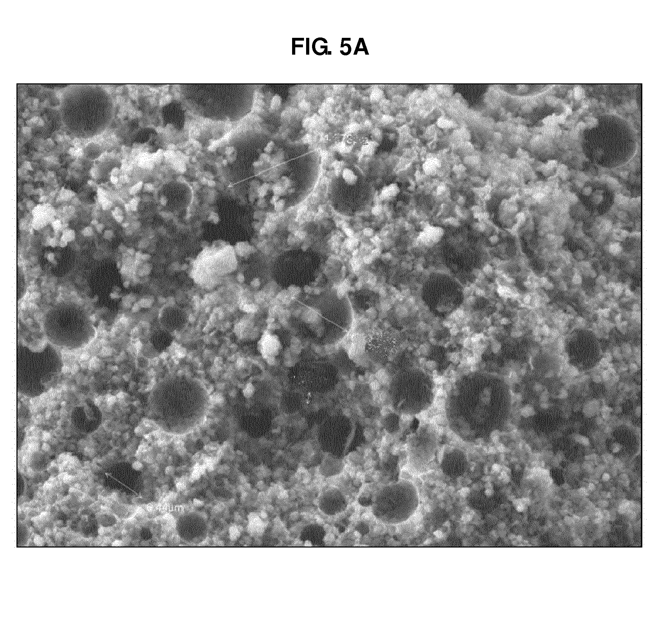

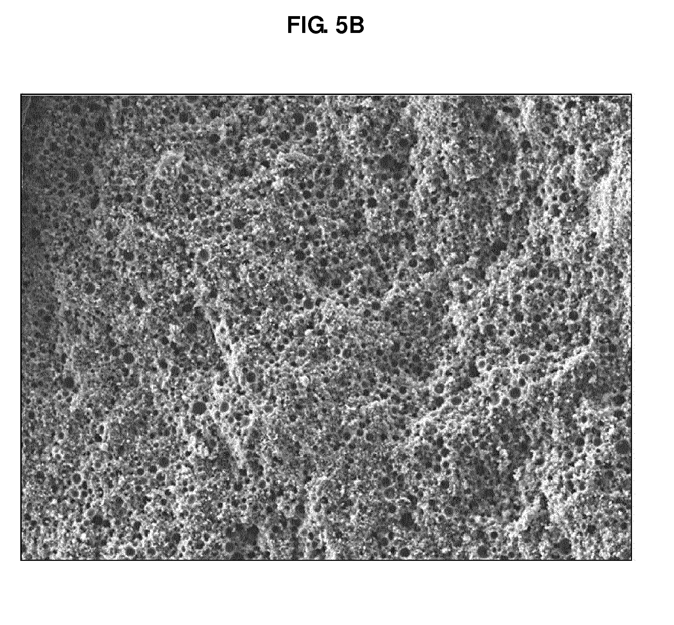

FIG. 4A is a sectional view of a zeolite complex (CP') including a zeolite crystal (Z), FIG. 4B is a sectional view of a zeolite complex (CP) according to an embodiment and FIG. 5 is an image of a cross-section of the zeolite complex (CP) according to the embodiment.

Referring to FIG. 4A, the zeolite complex (CP') includes closely arranged zeolite crystals (Z), thus inhibiting substance transfer between interior and exterior regions of the complex (CP'). In addition, a dead zone D in which substances are not smoothly transferred may be created and the dead zone D decreases efficiency of substance transfer.

Referring to FIG. 4B, the zeolite complex (CP) according to the embodiment includes one or more cavities (C) and one or more channels (S) having a pipe shape to connect the cavity (C) to an exterior part of the complex (CP), or to connect the cavities (C).

The zeolite complex (CP) is a complex of zeolite crystals (Z) and a gap is inevitably formed between the zeolite crystals (Z) due to arrangement and shape of zeolite crystals (Z). Hereinafter, the gap will be referred to as a void (V).

The zeolite crystal (Z) has a cage structure including a crystal-structure hole (H) in a center thereof and this is the same as the zeolite crystal (Z) constituting the general zeolite complex (CP').

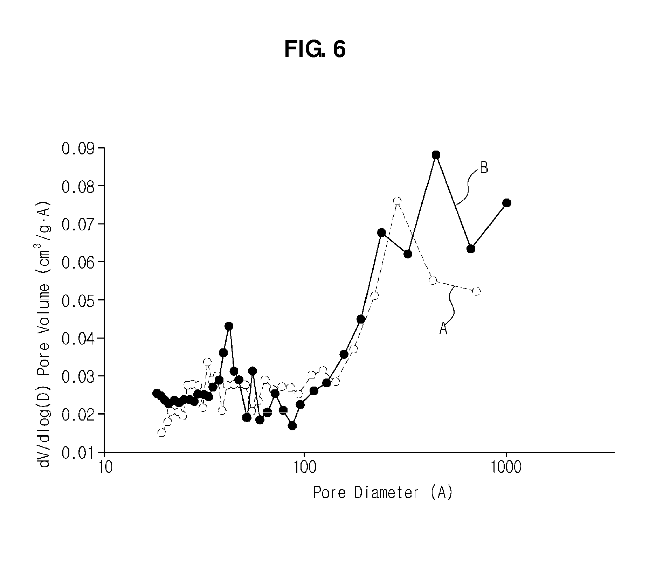

The hole (H) may have a diameter of 0.24 to 0.75 nm (2.4 to 7.5Å). The diameter of the hole (H) will be described with reference to a graph of FIG. 6.

As shown in FIG. 6, in the graph, a horizontal axis represents a diameter of the hole (H) and a vertical axis represents a volume of the hole (H) enabling substance transfer with respect to the diameter of the hole (H) (hereinafter, referred to as an "effective hole (H)"). In addition, the curve A shows a test result of the general zeolite complex (CP') and the curve B shows a test result of the zeolite complex (CP) according to the present embodiment.

Referring to the curve A, the effective hole (H) increases up to 0.08 cm³/g·Å in a section of diameter of the hole (H) of 0.5 to 0.59 nm (5 to 5.9Å), the effective hole (H) has a maximum of 0.08 cm³/g·Å in a section of the diameter of the hole (H) of about 0.59 nm (5.9Å), the effective hole (H) decreases down to 0.01 cm³/g·Å in a section of diameter of the hole (H) of 0.59 to 0.95 nm (5.9 to 9.5Å) and the effective hole (H) maintains at about 0.01 cm³/g·Å in a section of the diameter of the hole (H) of 0.95 nm (9.5Å) or higher.

Referring to the curve B, the effective hole (H) increases up to 0.225 cm³/g·Å in a section of the diameter of the hole (H) of 0.5 to 0.525 nm (5 to 5.25Å), the effective hole (H) has a maximum of 0.225 cm³/g·Å in a section of the diameter of the hole (H) of about 0.525 nm (5.25Å), the effective hole (H) sharply decreases down to 0.05 cm³/g·Å in a section of the diameter of the hole (H) of 0.525 to 0.65 nm (5.25 to 6.5Å), a decrement of the effective hole (H) is reduced and an increment thereof is reduced to 0.01 cm³/g·Å in a section of the diameter of the hole (H) of 0.24 to 0.75 nm (6.5 to 10Å), and the effective hole (H) maintains at about 0.01 cm³/g·Å in a section of the diameter of the hole (H) of 1 nm (10Å) or higher.

Comparing the curve A with the curve B, as illustrated in the curve B, when the diameter of the hole (H) in the zeolite crystals (Z) constituting the complex (CP) is about 0.525 nm (5.25Å), a maximum of a volume increment of the effective hole (H) is 0.225 cm³/g·Å which is two-fold or more higher than the maximum, 0.08 cm³/g·Å, shown in the curve A.

When the effective hole (H) increases, a capacity of the zeolite complex (CP) increases. Thus, the diameter of the hole (H) may be determined such that the effective hole (H) is maximized. Accordingly, the diameter of the hole (H) may range from 0.5 to 0.55 nm (5 to 5.5Å) or 0.51 to 0.54 nm (5.1 to 5.4Å).

The cavity (C) is a hollow formed in the zeolite complex (CP). The cavity (C) is provided to prevent reduction in rate of substance transfer between each of zeolite crystals (Z) included in the complex (CP) and an exterior region of the complex (CP).

In the present embodiment, the cavity (C) may have a spherical shape and may have a cylindrical shape according to formation process. Hereinafter, the description will be given under the assumption that the cavity (C) has a spherical shape, for convenience of description.

In order to accomplish objects of forming the cavity (C), the volume of the cavity (C) may be determined within 5 to 30% of the volume of the zeolite complex (CP), and the diameter of the cavity (C) may be 30 nm (300Å) or higher.

More specifically, regarding the volume of the cavity (C), the volume of the cavity (C) may correspond to at least 5% or more of a volume of the zeolite complex (CP) because the cavity (C) is formed so as to facilitate substance transfer between the zeolite crystal (Z) and the exterior region of the zeolite complex (CP) and may correspond to 10% or more of the volume of the zeolite complex (CP) to further facilitate the substance transfer.

In addition, as the number of cavities (C) formed per unit volume of the cavity (C) increases, a surface area of the cavity (C) formed in the zeolite complex (CP) increases and substance transfer is facilitated. Accordingly, the number of cavities (C) formed per unit volume of the cavity (C) may be as great as possible.

In addition, when a cavity (C) having a predetermined volume or higher is formed per unit volume of the zeolite complex (CP), structural strength of the zeolite complex (CP) may decrease. Accordingly, a volume of the cavity (C) may be less than or equal to 30% of a total volume of the zeolite complex (CP) so as to maintain structural strength of the complex.

This value is determined through a test related to the diameter of the cavity (C) and will be described with reference to the graph shown in FIG. 6.

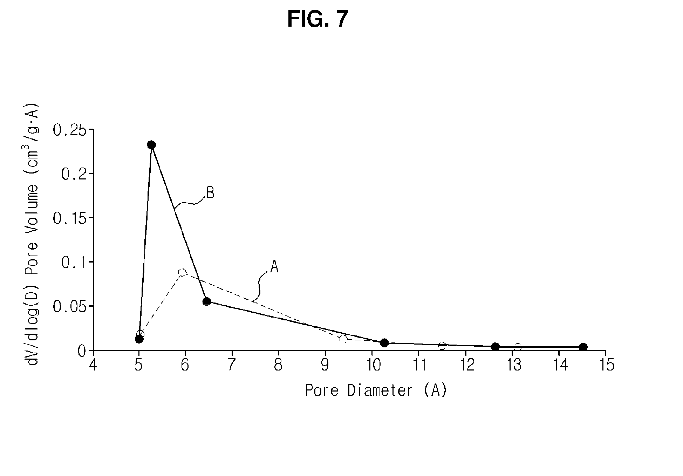

In the graph shown in FIG. 7, a horizontal axis represents a diameter of the cavity (C) and a vertical axis represents a volume of the cavity (C) enabling substance transfer with respect to the diameter of the cavity (C) (hereinafter, referred to as an "effective cavity (C)"). In addition, the curve A shows a test result of the zeolite complex (CP') and the curve B shows a test result of the zeolite complex (CP) according to the embodiment.

Referring to FIG. 7, when the diameter of the cavity (C) ranges from 1 to 10 nm (10 to 100Å), in the curves A and B, effective cavity (C) is randomly distributed within a range of 0.01 to 0.045 cm³/g·Å.

When the diameter of the cavity (C) ranges from 10 to 30 nm (100 to 300Å), both curves A and B increase and when the diameter of the cavity (C) is 30 nm (300Å) or higher, effective cavity (C) of the curve B is superior to that of the curve A.

In conclusion, the diameter of the cavity (C) may be 30 nm (300Å) or higher and may be 100 nm (1,000Å) or higher so as to form a structure including silica, a metal ion, or the like, as described later.

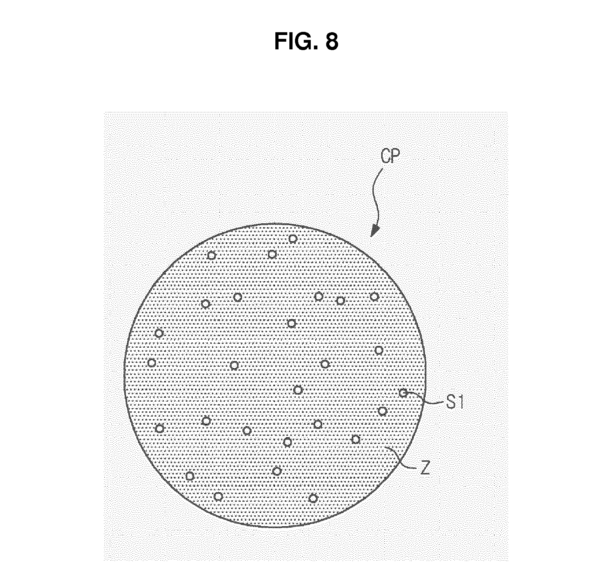

FIG. 8 is a perspective view illustrating a channel (S) formed on an outer surface of the zeolite complex (CP). The channel (S) will be described in detail with reference to FIG. 8.

The channel (S) is a substance passage, formed in the complex (CP). Referring to FIG. 8, plural channel inlets (S1) are formed outside the complex (CP) and the channel inlets (S1) are connected through the channel (S) to the cavity (C) formed in the complex, another channel (S), or the hole (H) formed in the zeolite crystal (Z).

The channel (S) is a passage facilitating substance transfer, a width of the channel (S) is smaller than that of the cavity (C) and may be greater than a width of the hole (h) formed in the zeolite crystal (Z) so as to facilitate substance transfer.

When the channel (S) is formed, a dead zone D in which substance transfer is not effective is generated in the complex, an area in which substance transfer is possible widens and efficiency of substance transfer is thus improved.

Hereinafter, characteristics of the zeolite complex (CP) according to an embodiment will be described in detail.

The zeolite complex (CP') induces industrially applicable physical and chemical properties such as cation exchange properties, adsorbent and molecular sieve properties, catalyst properties, dehydration and re-absorption properties and heat storage properties, as described above.

The zeolite complex (CP) according to the embodiment more effectively utilize properties of zeolites by controlling a volume, size and number of cavities (C), and width and length of the channel (S) and controlling a width of the hole (H) of the zeolite.

More specifically, a cation exchange property is a property in which cations present in the hole (H) of the zeolite crystal (Z) exchange. The zeolite complex (CP) is simply cleaned with a solution containing other cations, thereby facilitating ion-exchange between the cations in the hole (H).

Cation exchange capacity of zeolite is about 200 to about 400 mEq per 100g. The zeolite complex (CP) according to the present embodiment exhibits superior cation exchange property by controlling volume of cavities (C) and width and length of the channel (S).

Adsorbent and molecular sieve property refers to a property in which water present near cations in the hole (H) is removed when heating the zeolite complex (CP) to 350 to 400°C and the dehydrated zeolites selectively adsorb inorganic and organic molecules having a suitable size and shape, thus enabling separation between different molecules. The zeolite complex (CP) according to the present embodiment is more effectively used as a molecular sieve of a certain molecule by controlling a size and shape of the hole (H) of the zeolite crystal (Z) and controlling volume of the cavity (C) and width of the channel (S) and more specifically, may be utilized in applications such as desiccants for dehydrating a variety of gases, devices of generating certain gases, and removal of impurity gases such as sulfur dioxide (SO₂) and carbon dioxide (CO₂) from natural gas.

The catalyst property is created because the zeolite crystal (Z) has a hole (H) enough large to absorb molecules and the zeolite complex (CP) has a high space volume and thus high surface activity. In general, the catalyst property of zeolite is affected by structure of the zeolite crystal (Z), property and structural position of cations included in the hole (H), content ratio of Si/Al and the like.

The zeolite complex (CP) according to the embodiment may include the hole (H) and the void (V) as well as the cavity (C) and the channel (S), thus having large surface area and superior catalyst property. The catalyst property may be utilized in petroleum refining, methanol to gasoline (MTG) synthesis and the like.

Regarding dehydration and re-absorption properties, the zeolite complex (CP) contains a great amount of water, called "zeolite water" due to structural properties of the zeolite crystal (Z). Water content greatly changes according to physical and chemical conditions. Accordingly, the zeolite complex (CP) is gradually dehydrated when heated and reabsorbs water when cooled.

The zeolite complex (CP) according to the embodiment effectively controls removal and absorption of water by controlling the density of the cavity (C) and the width of the channel (S) and has the effects of reducing operation time and energy when applied to products such as dishwashers or dehumidifiers.

Hereinafter, water removal (dehydration) and reproduction test methods to examine dehydration and re-absorption properties and results thereof will be described in detail.

Testing is carried out using the zeolite complex (CP) including the cavity (C) and having a density of 500 kg/m³ or less. A zeolite complex (CP) not including the cavity (C) and having a density of 500 kg/m³ or higher is set as a control group.

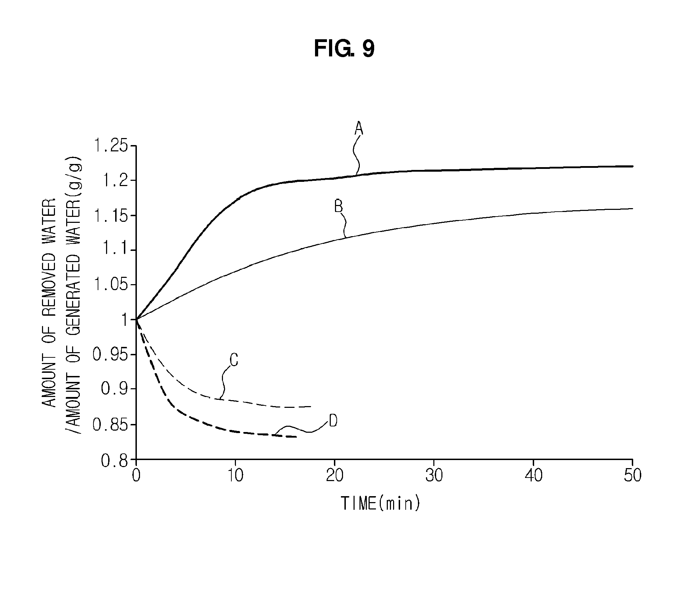

FIG. 9 is a graph showing results of the test. In the graph of FIG. 9, a horizontal axis represents time and a vertical axis represents a ratio of an amount of removed water to an amount of produced water. Dehumidification (water removal) capacity is superior, when the vertical axis is higher than 1 and dehumidification capacity is better as an absolute value thereof increases. Conversely, water reproduction is superior when the vertical axis is lower than 1 and water reproduction is better as an absolute value thereof increases.

In addition, the curves A and D of FIG. 9 show water removal and reproduction capacities of the zeolite complex (CP) according to the embodiment and the curves B and C show water removal and reproduction capacities of the control group.

As a result of the test, we confirmed that water removal (dehumidification) and water reproduction (humidification) are almost completed within 10 minutes after the test begins. Regarding the dehumidification capacity, after 10 minutes, a ratio of an amount of removed water to an amount of produced water in the curve B is about 1.075, while a ratio of an amount of removed water to an amount of produced water in the curve A is about 1.158. This demonstrates that the CP of the curve A exhibits dehumidification capacity higher than that of the CP of the curve B. Regarding water reproduction capacity, after 10 minutes, a ratio of an amount of removed water to an amount of produced water in the curve C is about 0.89, while a ratio of an amount of removed water to an amount of produced water in the curve D is about 0.84. This demonstrates that the CP of the curve D exhibits water reproduction capacity higher than that of the CP of the curve C.

That is, the zeolite complex (CP) including the cavity (C) and the channel (S) exhibits superior water removal and reproduction capacities.

Hereinafter, a zeolite complex (CP) according to an embodiment will be described in detail.

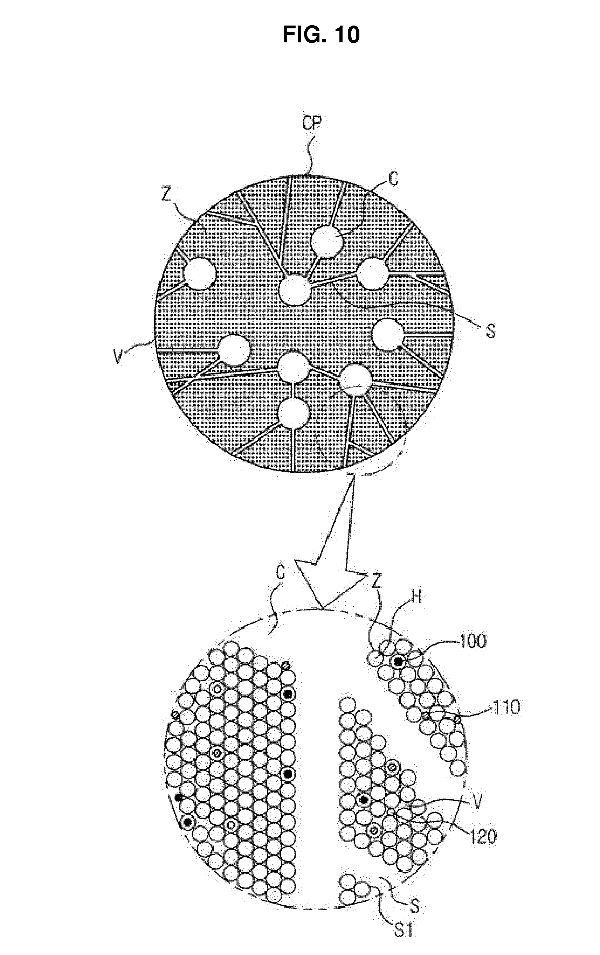

FIG. 10 shows the zeolite complex (CP) containing a ceramic 100, a metal ion 110 and a metal oxide 120.

Referring to FIG. 10, at least one of a cavity (C) and a void (V) formed in the zeolite complex (CP) and a hole (H) formed in the zeolite crystal (Z) may contain at least one of the ceramic 100, the metal ion 110 and the metal oxide 120.

More specifically, the zeolite complex (CP) according to the embodiment includes at least one cavity (C) and at least one channel S having a pipe shape to connect the cavity (C) to an exterior part of the complex (CP), or to connect the cavities (C). The cavity (C) may contain at least one of the ceramic 100, the metal ion 110 and the metal oxide 120.

In addition, the zeolite complex (CP) is a complex of zeolite crystals (Z), a gap is inevitably formed between the zeolite crystals (Z) due to arrangement and shape of zeolite crystals (Z) and the gap is referred to as a void (V), as described above.

The void (V) may contain at least one of the ceramic 100, the metal ion 110 and the metal oxide 120.

In addition, zeolite crystal (Z) has a cage structure including a crystal-structure hole (H) in a center thereof and the cage may contain at least one of the ceramic 100, the metal ion 110 and the metal oxide 120.

A weight of the ceramic 100, the metal ion 110 and the metal oxide 120 included in the zeolite complex (CP) is less than or equal to 30% of a total weight of the zeolite crystals (Z) constituting the zeolite complex (CP).

Hereinafter, properties of the zeolite complex (CP) according to the ceramic 100 and the metal ion 110 and the metal oxide 120 included in the zeolite crystal (Z) will be described in detail.

The term "ceramic 100" refers to all inorganic materials produced at high temperatures and the ceramic has a small weight and is free of thermal deformation. When the ceramic 100 is contained in the cavity (C) or the void (V) formed in the zeolite complex (CP), or the hole (H) formed in the zeolite crystal (Z), a specific heat of the zeolite complex (CP) increases.

As discussed, at least one of a cavity (C) and a void (V) formed in the zeolite complex (CP) and a hole (H) formed in the zeolite crystal (Z) may contain at least one of the ceramic 100, the metal ion 110 and the metal oxide 120. In some embodiments, parts of the zeolite complex (CP) that define the cavity (C), void (V) and/or hole (H) comprise at least one of the ceramic 100, the metal ion 110 and the metal oxide 120.

The ceramic 100 according to the embodiment may have a specific heat of 1 cal or higher and may be present such that a weight of the ceramic 100 is less than or equal to 30% of a total weight of zeolite crystals (Z) constituting the zeolite complex (CP).

The metal ion 110 is an ion of a metal atom which is mostly present as a cation. When the metal ion 110 is contained in the cavity (C) or the void (V) formed in the zeolite complex (CP), or the hole (H) formed in the zeolite crystal (Z), dehumidification capacity increases and specific heat also increases.

More specifically, when electrostatically strongly charged cations are contained in the cavity (C), the void (V) or the hole (H), 10 to 18 wt% of water molecules are incorporated into the hole (H) according to properties of the cations and dehumidifying effect is obtained.

The metal ion 110 may be present in an amount less than or equal to 30% of a total weight of the zeolite crystals (Z) constituting the zeolite complex (CP).

The metal oxide 120 refers to any metal compound bonded to oxygen (O₂). When the metal oxide 120 is contained in the cavity (C) or the void (V) formed in the zeolite complex (CP), or the hole (H) formed in the zeolite crystal (Z), catalytic performance of the zeolite complex (CP) is improved, specific heat is increased and dehumidification capacity is improved.

The metal oxide 120 according to the embodiment adsorbs an odor component, is used as a deodorant catalyst and contains at least one of silicon dioxide (SiO₂), magnesium oxide (MgO), aluminum oxide (Al₂O₃) and zinc oxide (ZrO₂).

In addition, the metal oxide 120 may be present in an amount less than or equal to 30% of a total weight of the zeolite crystals (Z) constituting the zeolite complex (CP).

As is apparent from the above description, the zeolite complex includes one or more cavities and one or more channels, thus facilitating transfer of heat and substances between interior and exterior regions of the zeolite complex and maintaining structural strength thereof.

In addition, a ceramic is incorporated in the zeolite complex, thus improving specific heat.

In addition, a metal ion is incorporated in the zeolite complex, thus improving dehumidification capacity and increasing specific heat.

In addition, a metal oxide is incorporated in the zeolite complex, thus improving a catalytic performance as a deodorant and enhancing dehumidification capacity as well as specific heat.

As discussed, embodiments of the invention can provide a zeolite complex comprising: one or more cavities; and a plurality of channels arranged to connect the cavities to an exterior part of the zeolite complex, or to connect to other cavities.

Such a complex can be manufactured by mixing Zeolite powder with a carbon based polymer material. Thereafter, the mixture can be molded in a circular form through a ball mill. Then, the mixture can be subject to a thermal treatment for several hours at a high temperature (for example, at about 300 degrees or above). In this process, the polymer containing carbon is combusted as disappears, producing cavity and channels. The polymer may be a small moleculule material or a high molecule material having carbon, for example, PP and PET, though any suitab polymer could be used.

Hence, embodiments of the invention can provide a method of manufacturing a zeolite complex comprising: mixing zeolite powder with a carbon based polymer material; and heat treating the resulting mixture to burn off the carbon based polymer material so as to produce a zeolite complex comprising cavities and channels, the channels either connecting cavities to an exterior part of the zeolite complex or to connecting cavities to other cavities. The mixing of the zeolite powder with the polymer material can comprise milling or grinding the zeolite powder and polymer and then moulding the resulting mixture.

Although a few embodiments have been shown and described, it would be appreciated by those skilled in the art that changes may be made in these embodiments without departing from the principles of the invention, the scope of which is defined in the claims and their equivalents.

## Claims

1. A zeolite complex comprising:
one or more cavities; and
a channel to connect a cavity to an exterior part of the zeolite complex, or to connect to other cavities.

2. The zeolite complex according to claim 1, wherein the zeolite complex is a complex of zeolite crystals,
wherein each zeolite crystal has a cage structure including a crystal-structure hole (H) in a center thereof.

3. The zeolite complex according to claim 2, wherein the hole has a diameter of about 0.24 nm (2.4 Å) to about 0.75 nm (7.5 Å).

4. The zeolite complex according to claim 2 or 3, wherein the hole comprises at least one component of a ceramic, a metal ion and a metal oxide.

5. The zeolite complex according to claim 4, wherein a weight of the component present in the hole is less than or equal to about 30% of a weight of the zeolite complex.

6. The zeolite complex according to any one of claims 1 to 5, wherein the cavity has a diameter of about 30 nm or more.

7. The zeolite complex according to any one of claims 1 to 6, wherein the cavity comprises at least one component of a ceramic, a metal ion and a metal oxide.

8. The zeolite complex according to claim 7, wherein a weight of the component present in the hole is less than or equal to about 30% of the weight of the zeolite complex.

9. The zeolite complex according to any one of claims 1 to 8, wherein a volume of the cavity is about 5% to about 35% of a volume of the zeolite complex.

10. The zeolite complex according to any one of claims 1 to 9, wherein the channel has a straight line or curved portion.
